# EUROPEAN PATENT APPLICATION

(11) **EP 4 699 718 A1**
(43) Date of publication of application: **25.02.2026**
(21) Application number: 24792378.2
(22) Date of filing: 07.03.2024
(51) Int. Cl.: B09B 5/00, B03C 1/00, B03C 1/02, B03C 1/005, B03C 1/22, B07C 5/04, B09B 3/30, B09B 3/35

(54) **METHOD FOR SORTING FOREIGN MATTER FROM WASTE GYPSUM BOARD**

(30) Priority: 20.04.2023 JP 2023069209
(71) Applicant: TOKUYAMA CORPORATION, Yamaguchi 745-8648 (JP)
(72) Inventor: HIRANAKA Shingo, Shunan-shi, Yamaguchi 745-8648 (JP)
(74) Representative: Kuhnen & Wacker Patent- und Rechtsanwaltsbüro PartG mbB
(86) International application number: PCT/JP2024/008774
(87) International publication number: WO 2024/219102

(57) **Abstract**

Waste gypsum board pieces and foreign matters resultant from crushing waste gypsum boards are made easily distinguishable. Waste gypsum boards are crushed and made into a mixture of gypsum board pieces and foreign matters; an air stream is blown onto the mixture of gypsum board pieces and foreign matters to scatter gypsum powder from gypsum board pieces and foreign matters. The foreign matters are sorted from gypsum board pieces after gypsum powder being scattered.

## Description

### Technical Field

This invention relates to sorting foreign matters from waste gypsum boards, and, in particular, to the removal of foreign matters from crushed pieces of waste gypsum boards, as a pretreatment for reclaiming gypsum from waste gypsum boards.

### Background Art

The applicant has succeeded in commercial reclaiming of gypsum from waste gypsum boards. For example, patent document 1 (JP 2021-79303A) describes the following major processes.
1) Crushing waste gypsum boards;
2) Sorting gypsum powder and crushed pieces by a sieve;
3) Removing metal pieces from the crushed pieces with a magnetic separator;
4) If necessary, the crushed pieces being finely crushed into gypsum powder and paper pieces for reclaiming the paper pieces;
5) Removing heavy foreign matters such as gravel from the gypsum powder by specific gravity separation;
6) Baking the gypsum powder for converting into semi-hydrate or anhydrate type III gypsum; and
7) Mixing the gypsum after baking with gypsum slurry for generating dihydrate gypsum particles.

Waste gypsum boards brought into a reclaiming facility include foreign matters such as concrete pieces, wood pieces, plastic pieces, and metal pieces. Therefore, gypsum board pieces and these foreign matters are sorted by hand or by a sorting machine comprising an image recognition device and a robot. However, foreign matters covered by gypsum powder are difficult to distinguish from gypsum board pieces. Since both foreign matters and gypsum board pieces are indefinite in shape, recognition by the difference in shape is difficult. Further since gypsum powder covers the surfaces of them, they are all white in color with no distinctive patterns. While visual recognition by human workers is possible to some extent, but recognition by image recognition devices is difficult.

### Prior Document List

### Patent Documents

Patent document 1 JP 2021-79303A

### Summary of the Invention

### Object of the Invention

The object of the invention is to enable easy distinction between gypsum board pieces and foreign matters, both generated by crushing waste gypsum boards, and easy removal of foreign matters. The object of the invention is, in particular, to enable an image recognition device to easily distinguish gypsum board pieces and foreign matters.

### Means for Solving the Problem

A method for sorting foreign matters from waste gypsum boards according to the invention comprises:
a crushing step for crushing waste gypsum boards into a mixture of gypsum board pieces and foreign matters;
an air showering step for blowing an air stream onto the mixture of gypsum board pieces and foreign matters to scatter gypsum powder from gypsum board pieces and foreign matters; and
a sorting step for sorting foreign matters from gypsum board pieces after gypsum powder being scattered.

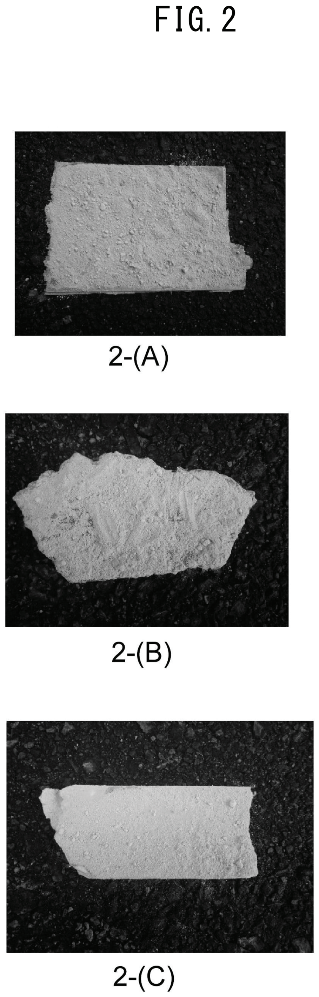

According to the invention, an air stream is blown onto the gypsum board pieces and foreign matters to scatter gypsum powder adhering on their surfaces. Foreign matters with gypsum powder adhering on it is white in color, has the similar shape with gypsum board pieces, and is difficult to be distinguished (See Fig. 2). Once gypsum powder is scattered, foreign matters become distinguishable due to the difference in color or shape. Therefore, the foreign matters are easily recognized and removed from the gypsum board pieces, and the inclusion of foreign matters in subsequent steps are prevented.

Preferably, in the crushing step, waste gypsum boards are crushed by shearing with a shearing crusher to a mixture of the gypsum board pieces, the foreign matters, and gypsum powder. Further a sieving step for sieving the gypsum powder from the mixture of gypsum board pieces, foreign matters and gypsum powder is carried out, between the crushing step and the air showering step. By the shear-type crushing, soft and hard foreign matters are crushed uniformly under a specified size. With reducing the size under the specified size, the foreign matters become relatively light in weight, and therefore, sorting by a robot becomes easy. In addition, gypsum board pieces produce a large amount of gypsum powder by the shear crushing; the powder is sieved for removing it from the crushed pieces; and the foreign matter recognition by a robot becomes easy in a subsequent step.

Preferably, in the sorting step, gypsum board pieces and foreign matters are recognized by an image recognition device, and the recognized foreign matters are sorted by a robot. Compared to manual sorting, manpower is saved.

Particularly preferably, in the air showering step, the air stream is blown by at least a nozzle onto gypsum board pieces and foreign matters on a conveyor conveying the mixture of gypsum board pieces and foreign matters. At least a periphery of said at least a nozzle is covered by a dust cover to prevent gypsum powder from spreading to an outside of the dust cover, and the blown air is exhausted from the dust cover through a dust collector.

### Brief Description of the drawing

Fig. 1: A process diagram of an embodiment
Fig. 2: Photographs before air shower treatment, showing: (A) a wood piece with gypsum powder; (B) a concrete piece with gypsum powder; and (C) a gypsum board piece with gypsum powder.
Fig. 3: Photographs after air shower treatment, showing: (A) the wood piece, (B) the concrete piece, and (C) the gypsum boards piece.

### Features for Carrying out the Invention

An embodiment for carrying out the invention will be described. The scope of the invention shall be construed based on the claims and in accordance with the understanding of those skilled in the art, taking into consideration the description of the specification and well-known art in the field.

### Embodiment

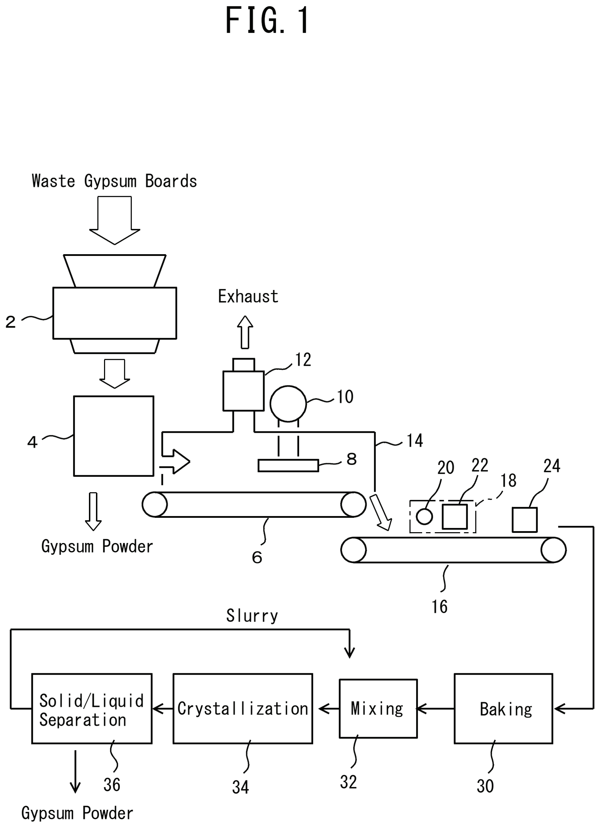

Fig. 1 shows an embodiment. Waste gypsum boards are fed into and crushed by a crusher (2) such as a shear-type biaxial crusher. By shear-type crushing, soft and hard foreign matters are crushed uniformly under a specified size. With reducing the size under the specified size, the foreign matters become relatively light in weight, and therefore, sorting by a robot becomes easy in a subsequent step. In addition, gypsum board pieces produce a large amount of gypsum powder by the shear crushing; the powder is sieved for removing it from the crushed pieces; and the foreign matter recognition becomes easy in the subsequent step. For these reasons, shear crushers are preferred for the crushing. The size of the crushed pieces is adjusted by the gap between the blades of the biaxial crusher. A gap between the blades of 30 to 150 mm is preferred. The crushed pieces and gypsum powder resultant from the crushing are fed into a sieve (4) such as a vibration sieve and the gypsum powder under the sieve is separated.

The crushed pieces include large foreign matters in size such as concrete pieces, wood pieces, plastic pieces, and metal pieces, other than the gypsum board pieces. The crushed pieces further include gravel, sand, and small metal pieces such as screws and nails, but they can be easily distinguished from the gypsum board pieces. Further, the gypsum board pieces may contain paper pieces derived from gypsum boards, but they do not prevent foreign matter recognition. If needed, paper pieces can be further separated by secondary crushing and further sieving, gravel, sand, and the small metal pieces can be separated by specific gravity selection, and metal pieces such as iron pieces can be separated by magnetic selection.

After gypsum powder is separated by the sieve (4), the crushed pieces are fed onto the conveying surface of a conveyor (6) such as a belt conveyor. Compressed air is supplied from a compressor (10) to air nozzles (8), and the compressed air is blown onto the crushed pieces, as an air shower, to scatter the gypsum powder from the surface of the crushed pieces. The air shower spreads the piled up crushed pieces flatly and makes the recognition of the crushed pieces easier. The conveyor (6) is covered with a dust cover (14) over the top and over the four sides, or over the top and bottom sides and four sides, to prevent the gypsum powder from leaking out with the airflow. While the dust cover (14) covers the entire conveyor (6) as shown in the figure, but may locally cover the both sides and the top of the conveyor (6) and the upstream and downstream sides around the nozzles (8).

The blown air is exhausted, along with gypsum dust, through a bag filter (12) or a dust collector such as a cyclone. This prevents the gypsum powder from being dispersed in the processing facility, and a bag filter is preferred because they are simple and can remove small gypsum particles. The type of conveyor (6) is optional. For example, a conveyor with a mesh conveying surface can be used, and small-sized gravel, sand, and small metal pieces can be dropped to the bottom of the conveyor through the mesh.

The crushed pieces after removing gypsum powder are fed onto a conveyor (16) on which one to several sorters (18) are arranged. The sorter (18) comprises an AI (20) equipped with an image recognition device to distinguish gypsum board pieces and foreign matters, and a robot (22) for removing the foreign matters according to the commands from the AI (20). The AI (20) distinguishes the gypsum board pieces and the foreign matters based upon characteristic features in their images and learns according to an input indicating a fault recognition. In addition to visible images, ultrasonic reflection images and so on, can be used for recognition. Recognition by ultrasonic images is prevented by gypsum powder over the gypsum board pieces and the foreign matters, and, therefore, recognition becomes difficult. An AI (20) may be provided for each robot (22), or a single AI (20) may distinguish foreign matters and control multiple robots (22) on the conveyor (16).

The robot (22) is, for example, provided with a hand moving along the width direction of the conveyor (16) and a chuck having claws or fingers on the hand to grip foreign matters, or a vacuum suction device on the hand. A robot may be equipped with a hand movable along the width direction of the conveyor (16) and also in three dimensions. The mechanism for gripping or absorbing the foreign matters is arbitrary. If the AI (20) and the robot (22) cannot completely sort the foreign matters, the foreign matters may be sorted and removed manually.

The conveyor (16) may be provided with a magnetic separator (24) or the like. Further, a sieve for removing gravel, sand, or other foreign matters, smaller in size and with a higher specific gravity than gypsum board pieces, and or a sieve for removing paper pieces may be provided at an upstream position (between the conveyor (6)) or a downstream position of the conveyor (16).

The gypsum board pieces after removal of concrete pieces, wood pieces, and plastic pieces are further crushed, for example, and then baked in a baking apparatus (30) to convert them into semi-hydrate or anhydrate type III gypsum. The gypsum powder obtained by the sieve (4), the gypsum powder obtained by the bag filters (12), and so on, are also baked by the baking apparatus (30). The baked gypsum powder is mixed with gypsum slurry in a mixing tank (32). Dihydrate gypsum particles are generated in the mixed gypsum slurry in a crystallization tank (34) and are separated into dihydrate gypsum powder and gypsum slurry by a solid-liquid separator (36). The resultant gypsum slurry is returned to the mixing tank (32). While according to the embodiment, dihydrate gypsum is reclaimed, semi-hydrate or anhydrate gypsum may be reclaimed.

In Fig. 2 (A), a wood piece before air showering (before gypsum powder removal) is shown, in (B), a concrete piece before air showering is shown, and, in (C), a gypsum board piece before air showering is shown. The gypsum powder adhering to the surface of the pieces makes the distinction between them difficult, and, in particular, it is difficult to distinguish between the wood pieces and gypsum board pieces.

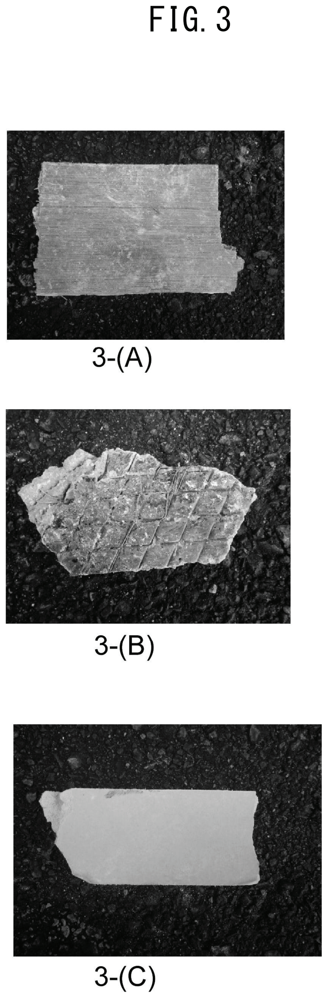

Figs. 3 (a), (b), and (c) show the same pieces after the air showering. On the concrete piece, surface irregularities and jagged sides are apparent. On the wood piece, wood color tones and textures are apparent and allow the distinguishment from gypsum board pieces, which are white and with no textures. Although not shown, plastic pieces have usually color and can be distinguished from gypsum board pieces when the gypsum powder is scattered. Therefore, manual selection by hand is enough for the distinguishment. When sorting by AI (20) and robot (22), foreign matters such as concrete and wood become distinguishable, and the processing facility needs less manpower.

### List of Symbols

- 2: Crushers
- 4: Sieve
- 6, 16: Conveyor
- 8: Air nozzles
- 10: Compressor
- 12: Bag filter
- 14: Dust cover
- 18: Sorter
- 20: AI
- 22: Robot
- 24: Magnetic separator
- 30: Baking apparatus
- 32: Mixing tank
- 34: Crystallization tank
- 36: Solid-liquid separator

## Claims

1. A method for sorting foreign matters from waste gypsum boards comprising:
a crushing step for crushing waste gypsum boards into a mixture of gypsum board pieces and foreign matters;
an air showering step for blowing an air stream onto the mixture of gypsum board pieces and foreign matters to scatter gypsum powder from gypsum board pieces and foreign matters; and
a sorting step for sorting foreign matters from gypsum board pieces after gypsum powder being scattered.

2. The method for sorting foreign matters from waste gypsum boards according to claim 1, wherein, in the crushing step, waste gypsum boards are crushed by shearing with a shearing crusher to a mixture of gypsum board pieces, foreign matters, and gypsum powder,
further comprising a sieving step for sieving gypsum powder from the mixture of gypsum board pieces, foreign matters and gypsum powder, between the crushing step and the air showering step.

3. The method for sorting foreign matters from waste gypsum boards according to claim 1 or 2, wherein, in the sorting step, gypsum board pieces and foreign matters are recognized by an image recognition device, and the recognized foreign matters are sorted by a robot.

4. The method for sorting foreign matters from waste gypsum boards according to claim 1 or 2, wherein, in the air showering step, the air stream is blown by at least a nozzle onto gypsum board pieces and foreign matters on a conveyor conveying the mixture of gypsum board pieces and foreign matters, and at least a periphery of said at least a nozzle is covered by a dust cover to prevent gypsum powder from spreading to an outside of the dust cover, and the blown air is exhausted from the dust cover through a dust collector.
